# EUROPÄISCHE PATENTSCHRIFT

(11) **EP 3 186 121 B1**
(45) Veröffentlichungstag und Bekanntmachung des Hinweises auf die Patenterteilung: **09.10.2019**
(21) Anmeldenummer: 15754114.5
(22) Anmeldetag: 06.08.2015
(51) Int. Cl.: B60T 8/36, F16L 55/033

(54) **VENTILEINHEIT ZUR DRUCKMODULATION IN EINER DRUCKLUFT-BREMSANLAGE**
VALVE UNIT FOR MODULATING PRESSURE IN AN AIR-BRAKE SYSTEM
UNITÉ DE SOUPAPE POUR LA MODULATION EN PRESSION DANS UNE INSTALLATION DE FREINAGE PNEUMATIQUE

(30) Priorität: 27.08.2014 DE 102014012709
(43) Veröffentlichungstag der Anmeldung: 05.07.2017
(73) Patentinhaber: WABCO GmbH, 30453 Hannover (DE)
(72) Erfinder: KLIK, Stefan, 30459 Hannover (DE); RUNGE, Karsten, 31832 Springe (DE); TEICHMANN, Andreas, 30916 Isernhagen (DE)
(74) Vertreter: Lauerwald, Jörg
(86) Internationale Anmeldenummer: PCT/EP2015/001627
(87) Internationale Veröffentlichungsnummer: WO 2016/029993

(56) Entgegenhaltungen:
- EP-A1- 0 439 303
- EP-A1- 2 322 397
- EP-A2- 0 994 003
- WO-A2-2009/152884
- DE-A1- 2 733 883
- DE-A1- 19 605 562

## Beschreibung

Die Erfindung betrifft eine Ventileinheit zur Druckmodulation in einer Druckluft-Bremsanlage, mit einem Bremsdruckeingang, einem Bremsdruckausgang und einem Entlüftungsausgang, sowie mit einem als Membranventil ausgebildeten Einlassventil, einem als Membranventil ausgebildeten Auslassventil und mit jeweils einem als 3/2-Wege-Magnetventil ausgebildeten Vorsteuerventil für jedes Membranventil, welche in einem länglichen Ventilgehäuse angeordnet sind, das mit einer in Einbaulage weitgehend horizontalen Teilungsebene in ein Basisgehäuse und einen Gehäusedeckel unterteilt ist, wobei der Bremsdruckeingang und der Bremsdruckausgang sowie der Entlüftungsausgang in dem Basisgehäuse angeordnet sind, die Membranventile in dem Basisgehäuse zwischen dem Bremsdruckeingang und dem Bremsdruckausgang mit parallelen Betätigungsachsen sowie einer Anordnung der Membranen in einer gemeinsamen, weitgehend der Teilungsebene entsprechenden Membranebene unter Einspannung zwischen dem Basisgehäuse und dem Gehäusedeckel in Längsrichtung hintereinander angeordnet sind, sowie die Vorsteuerventile in dem Gehäusedeckel angeordnet sind.

In blockiergeschützten, also mit einem Antiblockiersystem ausgerüsteten Druckluft-Bremsanlagen von Radfahrzeugen, wie Kraftfahrzeugen und Schienenfahrzeugen, ist in den von einem Bremsventil zu den Radbremszylindern führenden Bremsleitungen jeweils eine Ventileinheit zur Druckmodulation angeordnet. Diese Ventileinheit weist ein Einlassventil und ein Auslassventil auf. Mittels des Einlassventils ist ein Bremsdruckausgang wechselweise mit einem Bremsdruckeingang verbindbar oder gegenüber diesem absperrbar. Der Bremsdruckausgang ist an einem zu mindestens einem Radbremszylinder führenden Abschnitt einer Bremsleitung angeschlossen, und an dem Bremsdruckeingang ist ein von dem Bremsventil kommenden Abschnitt der Bremsleitung angeschlossen. Mit dem Auslassventil ist der Bremsdruckausgang wechselweise mit einem Entlüftungsausgang verbindbar oder gegenüber diesem absperrbar, welcher üblicherweise über ein Rückschlagventil und/oder Sieb in die Umgebung führt.

Aufgrund großer zu schaltender Volumenströme und entsprechend großer zu öffnender und zu schließender Strömungsquerschnitte sind das Einlassventil und das Auslassventil häufig als pneumatisch betätigbare Membranventile ausgebildet, die über jeweils ein als 3/2-Wege-Magnetventil ausgebildetes Vorsteuerventil ansteuerbar sind. Ein Membranventil weist eine weitgehend kreisscheibenförmige flexible Membran auf, die an ihrem Rand in einem Ventilgehäuse eingespannt ist. Auf der axialen Innenseite der Membran, auf der die mit den Drucklufteingängen und Druckluftausgängen verbundenen Strömungskanäle angeordnet sind, sind ein zentraler kreisrunder Ventilsitz eines zylindrischen inneren Strömungskanals und ein konzentrisch dazu angeordneter ringförmiger äußerer Strömungskanal angeordnet. Auf der axial gegenüberliegenden Außenseite der Membran ist eine Steuerkammer angeordnet, die durch das zugeordnete Vorsteuerventil wechselweise mit einem üblicherweise am Bremsdruckeingang entnommenen hohen Steuerdruck oder mit einem zumeist am Entlüftungsausgang entnommenen niedrigen Steuerdruck (Umgebungsdruck) beaufschlagbar ist. Bei Beaufschlagung der Steuerkammer mit dem hohen Steuerdruck wird die Membran gegen den Ventilsitz gedrückt, wodurch der innere Strömungskanal gegenüber dem äußeren Strömungskanal abgesperrt wird, was dem geschlossenen Zustand des betreffenden Membranventils entspricht. Bei Beaufschlagung der Steuerkammer mit dem niedrigen Steuerdruck wird die durch Formgebung zumeist selbsttätig an dem Ventilsitz anliegende Membran durch den in den Strömungskanälen herrschenden Bremsdruck von dem Ventilsitz abgehoben und in Richtung der Steuerkammer verschoben, wodurch der innere Strömungskanal mit dem äußeren Strömungskanal verbunden wird, was dem geöffneten Zustand des betreffenden Membranventils entspricht.

Eine derartige Ventileinheit weist die Schaltfunktionen "Druckaufbau", "Druckhalten" und "Druckabbau" auf. In der Schaltfunktion "Druckaufbau" der Ventileinheit sind das Einlassventil geöffnet und das Auslassventil geschlossen, so dass der über das Bremsventil am Bremsdruckeingang eingesteuerte Bremsdruck unverändert an den Bremsdruckausgang und an mindestens einen daran angeschlossenen Radbremszylinder weitergeleitet wird. Da die Schaltfunktion "Druckaufbau" dem Ruhezustand der Ventileinheit entspricht, verbindet das Vorsteuerventil des Einlassventils im unbestromten Zustand seiner Magnetspule die Steuerkammer des Einlassventils mit einer den niedrigen Steuerdruck führenden Steuerleitung. Ebenso verbindet das Vorsteuerventil des Auslassventils im unbestromten Zustand seiner Magnetspule die Steuerkammer des Auslassventils mit einer den hohen Steuerdruck führenden Steuerleitung.

In der Schaltfunktion "Druckhalten" der Ventileinheit sind das Einlassventil und das Auslassventil geschlossen, so dass der am Bremsdruckausgang und dem mindestens einen daran angeschlossenen Radbremszylinder anliegende Bremsdruck dann konstant gehalten wird. Zur Einstellung dieser Schaltfunktion wird nur das Vorsteuerventil des Einlassventils durch Bestromung seiner Magnetspule umgeschaltet und damit die Steuerkammer des Einlassventils mit dem hohen Steuerdruck beaufschlagt.

In der Schaltfunktion "Druckabbau" der Ventileinheit sind das Einlassventil geschlossen und das Auslassventil geöffnet, so dass der Bremsdruckausgang und der mindestens eine daran angeschlossene Radbremszylinder dann entlüftet werden. Zur Einstellung dieser Schaltfunktion werden beide Vorsteuerventile durch Bestromung ihrer Magnetspulen umgeschaltet und damit die Steuerkammer des Einlassventils mit dem hohen Steuerdruck und die Steuerkammer des Auslassventils mit dem niedrigen Steuerdruck beaufschlagt.

Die Schaltfunktionen "Druckhalten" und "Druckabbau" der Ventileinheit sind Blockierschutzfunktionen, mit denen ein bremsbedingtes Blockieren des mindestens einen zugeordneten Rades vermieden werden soll. Diese Schaltfunktionen werden durch eine entsprechende Ansteuerung der Vorsteuerventile von einem Steuergerät eines Antiblockiersystems gesteuert, in dem die Signale von Raddrehzahlsensoren zur Erkennung eines bevorstehenden oder schon eingetretenen Blockierens der gebremsten Räder ausgewertet werden.

Hinsichtlich der geometrischen Anordnung der Drucklufteingänge und Druckluftausgänge, der als Membranventile ausgebildeten Einlassventile und Auslassventile, sowie der als Magnetventile ausgebildeten Vorsteuerventile in einem Ventilgehäuse sind unterschiedliche Ausführungen von Ventileinheiten bekannt.

So sind zum Beispiel aus den Druckschriften DE 22 24 274 C3, DE 34 08 123 A1, DE 38 25 549 A1, DE 40 05 608 A1 und DE 40 08 095 A1 verschiedene Ausführungen von Ventileinheiten bekannt, bei denen die Membranebenen des Einlassventils und des Auslassventils jeweils senkrecht zueinander oder parallel zueinander ausgerichtet sind. Die als 3/2-Wege-Magnetventile ausgebildeten Vorsteuerventile sind bei diesen Ventileinheiten entweder mit unterschiedlicher Ausrichtung ihrer Betätigungsachsen nahe des jeweils zugeordneten Membranventils oder parallel und radial benachbart zueinander in unterschiedlichen Bereichen des jeweiligen Ventilgehäuses angeordnet.

Aufgrund der Anordnung der Einlass- und Auslassventile sowie der Vorsteuerventile, aber auch der jeweiligen Drucklufteingänge und Druckluftausgänge, ist bei den vorgenannten Ventileinheiten eine mehrteilige Ausführung und eine aufwändige mechanische Bearbeitung des jeweiligen Ventilgehäuses erforderlich. Besonders die jeweilige Anordnung der Membranen des Einlassventils und des Auslassventils in unterschiedlichen Membranebenen erfordert ein mehrfaches Umspannen der Gehäuseteile zur mechanischen Bearbeitung der Ventilsitze und der Kanal- bzw. Kammerränder, zwischen denen die Membranen eingespannt werden. Zur Verringerung des Herstellungsaufwands sind daher bereits Ventileinheiten vorgeschlagen worden, bei denen die Membranventile mit parallelen Betätigungsachsen und einer Anordnung der Membranen in einer gemeinsamen, weitgehend einer Teilungsebene zwischen zwei Gehäuseteilen entsprechenden Membranebene angeordnet sind.

Eine derartige Ventileinheit ist beispielsweise in der DE 25 17 571 A1 beschrieben. Bei dieser bekannten Ventileinheit ist ein langförmiges Ventilgehäuse mit einer in Einbaulage horizontalen Teilungsebene in ein Gehäuseunterteil und ein Gehäuseoberteil unterteilt. Der Bremsdruckeingang und der Entlüftungsausgang sind in Längsrichtung mit horizontaler Ausrichtung weitgehend axial gegenüberliegend und der Bremsdruckausgang mit ebenfalls horizontaler Ausrichtung weitgehend mittig rechtwinkelig dazu in dem Gehäuseunterteil angeordnet. Die Membranventile sind in dem Gehäuseunterteil zwischen dem Bremsdruckeingang und dem Entlüftungsausgang mit parallelen Betätigungsachsen und einer Anordnung der Membranen in einer gemeinsamen, weitgehend der Teilungsebene entsprechenden Membranebene unter Einspannung zwischen dem Gehäuseunterteil und dem Gehäuseoberteil in Längsrichtung des Ventilgehäuses hintereinander angeordnet. Das Vorsteuerventil des Einlassventils und das Vorsteuerventil des Auslassventils sind mit jeweils vertikaler Ausrichtung ihrer Betätigungsachsen und gleichen Schaltrichtungen oberhalb des jeweils zugeordneten Membranventils radial benachbart zueinander in dem Gehäuseoberteil angeordnet.

Bei einer weiteren, aus der EP 0 498 584 B1 bekannten derartigen Ventileinheit ist das Ventilgehäuse mit einer in Einbaulage vertikalen Teilungsebene in ein Eingangsgehäuse und ein Ausgangsgehäuse unterteilt. Der Bremsdruckeingang ist mit horizontaler Ausrichtung oben in dem Eingangsgehäuse angeordnet. Der Bremsdruckausgang ist mit horizontaler Ausrichtung dem Bremsdruckeingang weitgehend axial gegenüberliegend in dem Ausgangsgehäuse angeordnet, wogegen der Entlüftungsausgang vertikal nach unten gerichtet in dem Ausgangsgehäuse angeordnet ist. Die Membranventile sind in dem Ausgangsgehäuse zwischen dem Bremsdruckausgang und dem Entlüftungsausgang mit parallelen Betätigungsachsen und einer Anordnung der Membranen in einer gemeinsamen, weitgehend der Teilungsebene entsprechenden Membranebene unter Einspannung zwischen dem Ausgangsgehäuse und dem Eingangsgehäuse vertikal übereinander angeordnet. Das Vorsteuerventil des Einlassventils und das Vorsteuerventil des Auslassventils sind mit jeweils horizontaler Ausrichtung ihrer Betätigungsachsen und entgegengesetzten Schaltrichtungen in etwa mittig rechtwinkelig zu den Drucklufteingängen und Druckluftausgängen sowie parallel zu der Teilungsebene radial benachbart zueinander in dem Eingangsgehäuse angeordnet. Die Magnetspulen der Vorsteuerventile sind in einem Magnetblock angeordnet, der zusammen mit den eingesetzten mechanischen Bauteilen der Magnetventile zwischen einem Gehäuseoberteil und einem Gehäuseunterteil des Eingangsgehäuses angeordnet ist. Zur Abdichtung sind zwischen dem Magnetblock, den Ventilblöcken, und den Ventilsitzen der Magnetventile einerseits und dem Gehäuseoberteil und dem Gehäuseunterteil des Eingangsgehäuses andererseits Dichtungen bzw. Dichtringe angeordnet. Zur Fixierung des Gehäuseoberteils und des Gehäuseunterteils mit dem Magnetblock der Magnetventile einerseits sowie der Einspannung der Membranen der Membranventile andererseits sind das Gehäuseoberteil und das Gehäuseunterteil des Eingangsgehäuses jeweils mit dem Ausgangsgehäuse verschraubt.

Schließlich ist in der DE 10 2008 028 439 B3 eine derartige Ventileinheit beschrieben, bei der ein längliches Ventilgehäuse mit in Einbaulage weitgehend horizontalen Teilungsebenen in ein Gehäuseunterteil, ein Gehäuseoberteil sowie eine dazwischen angeordnete Zwischenplatte unterteilt ist. Der Bremsdruckeingang, der Bremsdruckausgang, und der Entlüftungsausgang sind mit jeweils horizontaler Ausrichtung in dem Gehäuseunterteil angeordnet. Die Membranventile sind in dem Gehäuseunterteil mit parallelen Betätigungsachsen und einer Anordnung der Membranen in einer gemeinsamen, weitgehend der Teilungsebene zwischen dem Gehäuseunterteil und der Zwischenplatte entsprechenden Membranebene unter Einspannung zwischen dem Gehäuseunterteil und der Zwischenplatte in Längsrichtung hintereinander angeordnet. Das Vorsteuerventil des Einlassventils und das Vorsteuerventil des Auslassventils sind mit jeweils vertikaler Ausrichtung ihrer Betätigungsachsen und gleichen Schaltrichtungen in etwa mittig oberhalb der Membranventile radial benachbart zueinander in dem Gehäuseoberteil angeordnet. Die Zwischenplatte ist mit dem Gehäuseunterteil verschraubt. Das Gehäuseoberteil ist über einen äußeren Deckel mit der Zwischenplatte oder dem Gehäuseunterteil verschraubt. In der Teilungsebene zwischen dem Gehäuseoberteil und der Zwischenplatte sind Dichtungen angeordnet.

Bei den bekannten Ventileinheiten führt der Entlüftungsausgang üblicherweise über ein Rückschlagventil und/oder ein Sieb in die Umgebung. In den Ausführungsformen der Ventileinheiten gemäß der DE 22 24 274 C3, der DE 25 17 571 A1, der DE 34 08 123 A1, der DE 40 08 095 A1 und der EP 0 498 584 B1 ist der Entlüftungsausgang jeweils mit einem als selbsttätiges Membranventil ausgebildeten Rückschlagventil versehen. Bei der Ausführungsform der Ventileinheit gemäß der EP 0 498 584 B1 ist dem Rückschlagventil in Strömungsrichtung zusätzlich ein Sieb vorgesetzt.

Durch ein Rückschlagventil und/oder ein Sieb kann der Entlüftungsausgang sowie das diesem vorgeschaltete Auslassventil zwar relativ gut gegen das Eindringen von Spritzwasser und von aufgewirbelten Schmutzpartikeln geschützt werden. Die bei geöffnetem Auslassventil durch die abströmende Druckluft erzeugten Geräusche, welche die Lärmemissionen des betreffenden Fahrzeugs erhöhen und von Passanten als unangenehm wahrgenommen werden, können dadurch jedoch nur unzureichend gedämpft werden.

Die DE 27 33 883 (A1**)** offenbart ein ABS Bremssystem mit Ventilen mit "Ablassöffnungen". Zum Thema Geräuschentwicklung bei Ablassvorgängen oder zu Schalldämpfern offenbart die DE 27 33 883 nichts.

Die WO 2009/152884 A2 offenbart und beansprucht "Geräuschdämpfer für Druckluftsysteme" bei denen im Inneren eines Dämmmittels Stege der durchströmenden Druckluft einen mäanderartigen Weg aufzwingen. Zur Befestigung der Geräuschdämpfer ist nichts offenbart.

Die EP 2 322 397 A1 offenbart einen Schalldämpfer und Einzelheiten zu seinem inneren Aufbau. Zur Befestigung des Schalldämpfers ist eine mit einem Federstahlring verstärkte "Verschnappung mit der fahrzeugseitigen Verrohrung" offenbart. Zu alternativen Befestigungsarten ist nichts offenbart.

Der Erfindung liegt daher die Aufgabe zugrunde, eine Ventileinheit der eingangs genannten Bauart mit einem wirksamen Schalldämpfer am Entlüftungsausgang zu versehen, der kostengünstig herstellbar und Platz sparend an dem Ventilgehäuse montierbar ist.

Diese Aufgabe ist in Verbindung mit den Merkmalen des Oberbegriffs des Anspruchs 1 dadurch gelöst, dass die Ventileinheit am Entlüftungsausgang mit einem Schalldämpfer versehen ist, der ein weitgehend zylindrisches Schalldämpfergehäuse mit einer Eintrittsöffnung, einer radial innen angeordneten Beruhigungskammer, einer großflächigen Austrittsöffnung und einer der Austrittsöffnung innerhalb des Schalldämpfergehäuses vorgelagerten Schalldämpfungseinlage aus einer luftdurchlässigen sowie schalldämpfenden Materialanordnung aufweist, dass der Schalldämpfer mit parallel zu der Teilungsebene ausgerichteten Basiswänden zwischen dem Bremsdruckeingang und dem Bremsdruckausgang an dem Basisgehäuse befestigt ist, und dass das Schalldämpfergehäuse über eine Verschraubung eines ebenen Gehäusedeckels des Schalldämpfergehäuses mit dem Basisgehäuse an dem Ventilgehäuse befestigt ist.

Vorteilhafte Ausgestaltungen und Weiterbildungen der erfindungsgemäßen Ventileinheit sind Gegenstand der Unteransprüche.

Die Erfindung geht demnach von einer an sich bekannten Ventileinheit zur Druckmodulation in einer Druckluft-Bremsanlage aus, die einen Bremsdruckeingang, einen Bremsdruckausgang und einen Entlüftungsausgang aufweist, sowie über ein als Membranventil ausgebildetes Einlassventil, ein als Membranventil ausgebildetes Auslassventil, und jeweils ein als 3/2-Wege-Magnetventil ausgebildetes Vorsteuerventil für jedes Membranventil verfügt. Die Drucklufteingänge und Druckluftausgänge sowie die Membranventile und Magnetventile sind in einem länglichen Ventilgehäuse angeordnet, das mit einer in Einbaulage weitgehend horizontalen Teilungsebene in ein Basisgehäuse und einen Gehäusedeckel unterteilt ist. Der Bremsdruckeingang und der Bremsdruckausgang sind in Längsrichtung des Ventilgehäuses beispielsweise mit horizontaler Ausrichtung weitgehend axial gegenüberliegend und der Entlüftungsausgang beispielsweise dazwischen vertikal nach unten gerichtet in dem Basisgehäuse angeordnet. Die Membranventile sind in dem Basisgehäuse zwischen dem Bremsdruckeingang und dem Bremsdruckausgang mit parallelen Betätigungsachsen sowie einer Anordnung der Membranen in einer gemeinsamen, weitgehend der Teilungsebene entsprechenden Membranebene unter Einspannung zwischen dem Basisgehäuse und dem Gehäusedeckel in Längsrichtung hintereinander angeordnet. Die Vorsteuerventile sind dagegen in dem Gehäusedeckel angeordnet.

Zur wirksamen Geräuschdämpfung der bei geöffnetem Auslassventil aus dem Entlüftungsausgang austretenden Druckluft ist die Ventileinheit am Entlüftungsausgang erfindungsgemäß mit einem Schalldämpfer versehen, der ein weitgehend zylindrisches Schalldämpfergehäuse mit einer Eintrittsöffnung, einer radial innen angeordneten Beruhigungskammer, einer großflächigen Austrittsöffnung, und einer der Austrittsöffnung innerhalb des Schalldämpfergehäuses vorgelagerten Schalldämpfungseinlage aufweist, wobei letztere aus einer luftdurchlässigen und schalldämpfenden Materialanordnung besteht. Der Schalldämpfer ist mit parallel zu der Teilungsebene ausgerichteten Basiswänden des Schalldämpfergehäuses zwischen dem Bremsdruckeingang und dem Bremsdruckausgang an dem Basisgehäuse befestigt.

Bei geöffnetem Auslassventil strömt Druckluft mit relativ hohem Druck aus dem an den Bremsdruckausgang angeschlossenen Bremsleitungsabschnitt über den Entlüftungsausgang und die Eintrittsöffnung in die Beruhigungskammer des Schalldämpfers sowie von dort über die Schalldämpfungseinlage und die Austrittsöffnung in die Umgebung. Durch das relativ große Volumen der Beruhigungskammer, die großflächige Austrittsöffnung und die schalldämpfende Materialanordnung der Schalldämpfungseinlage wird die Strömungsgeschwindigkeit der Druckluft reduziert und es werden Druckluftschwingungen abgebaut. Dadurch werden die Geräusche der austretenden Druckluft, die bei einem mit hoher Strömungsgeschwindigkeit am Bremsdruckausgang unmittelbar in die Umgebung austretenden Druckluftstrahl im Wesentlichen durch Verwirbelungen am Strahlrand hervorgerufen werden, mit relativ einfachen Mitteln deutlich reduziert. Zusätzlich werden der Entlüftungsausgang und das diesem vorgeschaltete Auslassventil insbesondere durch die Schalldämpfungseinlage des Schalldämpfers auch gegen das Eindringen von Spritzwasser und von aufgewirbelten Schmutzpartikeln geschützt.

Aus fertigungstechnischen und montagetechnischen Gründen besteht das Schalldämpfergehäuse bevorzugt aus einem weitgehend topfzylindrischen Grundgehäuse mit einer Zylinderwand und einem Gehäuseboden sowie einem ebenen Gehäusedeckel, wobei der Gehäuseboden des Grundgehäuses im eingebauten Zustand der Teilungsebene des Ventilgehäuses zugewandt und mit der an dem Entlüftungsausgang anliegenden Eintrittsöffnung versehen ist.

Zur Erzielung einer sehr großen Austrittsfläche ist die Austrittsöffnung des Schalldämpfergehäuses vorteilhaft in der Zylinderwand des Grundgehäuses ausgebildet und kann sich mit einer Ausrichtung mit Bezug zu dem Bremsdruckeingang über einen Winkelbereich von bis zu 270° erstrecken.

Um trotz der großflächigen Austrittsöffnung eine ausreichende Stabilität des Schalldämpfungsgehäuses zu erreichen, ist die Austrittsöffnung von mehreren, über den Umfang des Grundgehäuses verteilt zwischen dem Gehäuseboden und einem Außenrand des Grundgehäuses angeordneten Stegen durchsetzt ist.

Zur Montageerleichterung und Lagefixierung des Grundgehäuses des Schalldämpfers weist der Gehäuseboden des Grundgehäuses vorteilhaft mindestens eine axial nach außen gerichtete Erhebung, wie beispielsweise einen Steg oder eine Noppe, auf, die im eingebauten Zustand in eine entsprechende Ausnehmung, wie beispielsweise eine Nut oder eine Bohrung, des Basisgehäuses der Ventileinheit eingreift.

In einer Ausführungsform weist die Schalldämpfungseinlage eine teilzylindrische Schale auf, die im montierten Zustand innen an der Austrittsöffnung des Schalldämpfergehäuses anliegt und durch einen kreisflächenförmigen Bodenabschnitt versteift ist.

Gemäß einer zweiten Ausführungsform weist die Schalldämpfungseinlage zwei teilzylindrische Schalen auf, die koaxial zueinander und radial beabstandet voneinander angeordnet sind, die durch einen kreisförmigen Bodenabschnitt und umfangsseitig unmittelbar miteinander verbunden sind, und von denen die radial äußere Schale im montierten Zustand innen an der Austrittsöffnung des Schalldämpfergehäuses anliegt.

Unabhängig von der konkreten Formgestaltung kann die Schalldämpfungseinlage als Geflecht aus Mineralfasern, Metallfasern oder Kunststofffasern hergestellt sein, wobei diese Fasern weitgehend geordnet in Form eines Gewebes oder weitgehend ungeordnet in Form eines Fliesstoffes angeordnet sein können.

Alternativ dazu kann die Schalldämpfungseinlage auch als ein poröses Sinterbauteil aus Metall, wie zum Beispiel aus Bronze, Kupfer, Stahl oder Aluminium, oder aus Kunststoff hergestellt, also entsprechend luftdurchlässig gepresst oder formgespritzt sein.

Eine weitere Möglichkeit besteht darin, dass die Schalldämpfungseinlage als poröses Gussteil aus Metall, wie beispielsweise aus Aluminium oder aus Kunststoff hergestellt ist. Ein derartiges poröses Gussteil kann dadurch hergestellt werden, dass das Metall oder der Kunststoff zusammen mit eingemischten Salzkörnern vergossen wird, die anschließend ausgewaschen werden.

Damit die Abmessungen des Ventilgehäuses durch den Schalldämpfer nicht wesentlich vergrößert werden, ist bevorzugt vorgesehen, dass das Basisgehäuse an seiner von der Teilungsebene abgewandten Unterseite eine Ausnehmung aufweist, in die das Schalldämpfergehäuse im eingebauten Zustand zumindest teilweise eingesetzt ist.

Ebenso ist das Schalldämpfergehäuse vorteilhaft über eine Verschraubung des Gehäusedeckels mit dem Basisgehäuse der Ventileinheit befestigt, da hierdurch gegenüber einer separaten Befestigung des Gehäusedeckels an dem Grundgehäuse des Schalldämpfers und des gesamten Schalldämpfergehäuses an dem Basisgehäuse Bauraum eingespart und der Montageaufwand reduziert wird.

Sofern das Basisgehäuse der Ventileinheit einen zum Schalldämpfer benachbarten, nach außen offenen Verbindungskanal aufweist, so kann dieser Verbindungskanal im eingebauten Zustand durch den Gehäuseboden des Schalldämpfergehäuses verschlossen sein. Hierbei sind dann zwischen den Verbindungskanal begrenzenden Gehäusewänden des Basisgehäuses der Ventileinheit und dem Gehäuseboden des Schalldämpfergehäuses Dichtelemente angeordnet. Diese Ausführungsvariante betrifft insbesondere einen bei der betrachteten Ventileinheit vorhandenen U-förmigen Verbindungskanal, über den der ausgangsseitige Zentralkanal des Einlassventils mit dem eingangsseitigen Ringkanal des Auslassventils in Verbindung steht, und der bei der üblichen Herstellung des Basisgehäuses als Leichtmetall-Druckgussbauteil bei nach außen geschlossener Bauweise schwierig zu entkernen wäre.

Zur weiteren Verdeutlichung der Erfindung ist der Beschreibung eine Zeichnung mit mehreren Ausführungsbeispielen beigefügt. In dieser zeigt
Fig. 1 eine bevorzugte Ausführungsform einer Ventileinheit mit einem Schalldämpfer in einer ersten perspektivischen Ansicht,
Fig. 2 die Ausführungsform der Ventileinheit gemäß Fig. 1 in einer zweiten perspektivischen Ansicht,
Fig. 3 die Ausführungsform der Ventileinheit gemäß Fig. 1 und Fig. 2 in einem Längsmittelschnitt,
Fig. 4 die Ausführungsform der Ventileinheit gemäß den Figuren 1 bis 3 in einem Horizontalschnitt,
Fig. 5a ein Gehäuseteil des Schalldämpfers gemäß den Figuren 1 bis 4 in einer ersten perspektivischen Ansicht,
Fig. 5b das Gehäuseteil des Schalldämpfers gemäß den Figuren 1 bis 4 in einer zweiten perspektivischen Ansicht,
Fig. 6 eine erste Ausführungsform einer Schalldämpfungseinlage des Schalldämpfers gemäß den Figuren 1 bis 5b in einer perspektivischen Ansicht,
Fig. 7 eine zweite Ausführungsform einer Schalldämpfungseinlage des Schalldämpfers gemäß den Figuren 1 bis 5b in einer perspektivischen Ansicht,
Fig. 8 eine Ventileinheit in einem ersten vertikalen Längsschnitt,
Fig. 9 die Ventileinheit gemäß Fig. 8 in einem zweiten vertikalen Längsschnitt, und
Fig. 10 die Ventileinheit gemäß Fig. 8 und Fig. 9 in einem Horizontalschnitt.

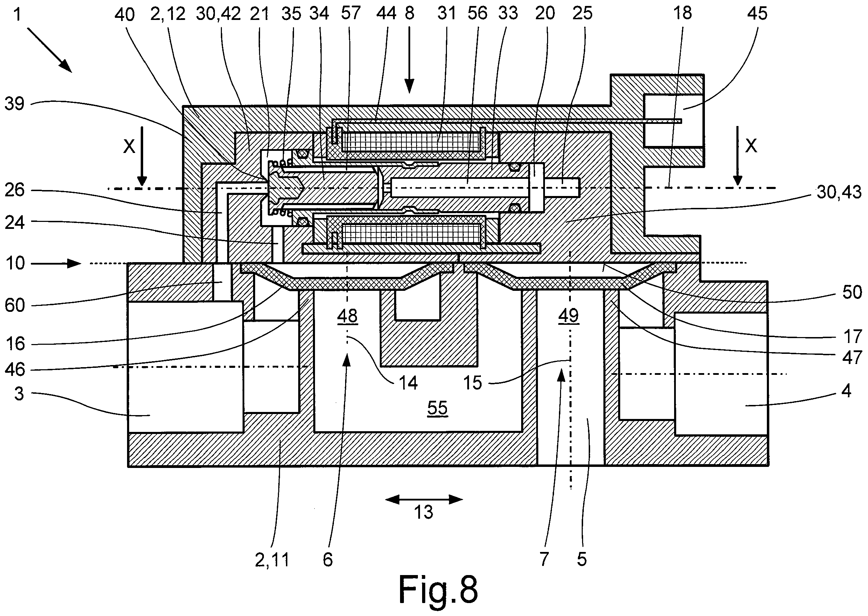

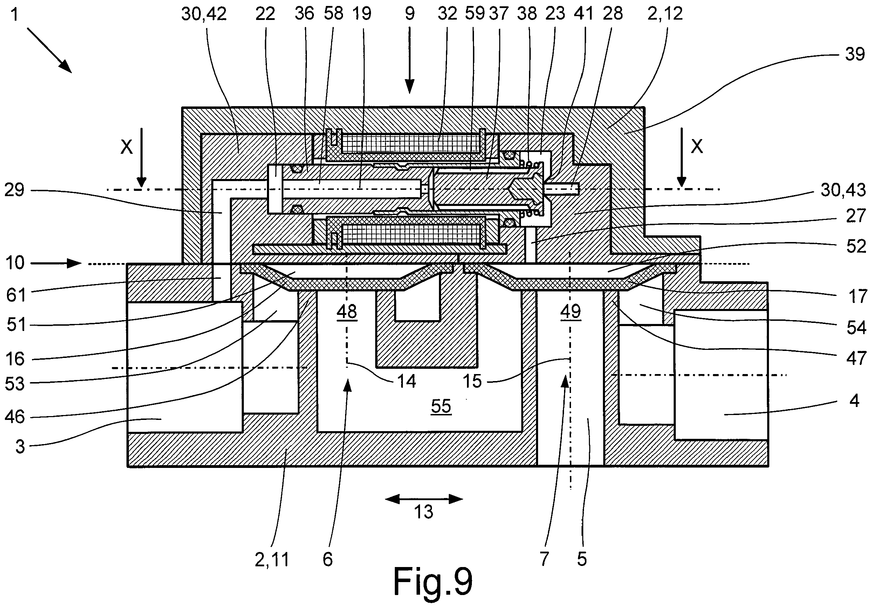

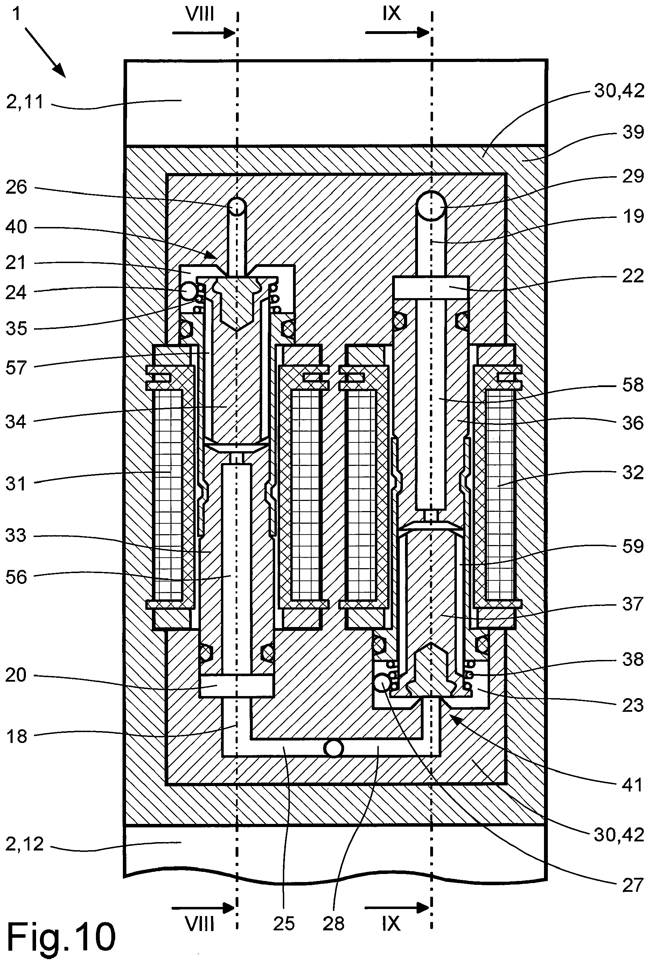

Nachfolgend wird zunächst anhand der Figuren 8 bis 10 der prinzipielle Aufbau und die Funktionsweise einer Ventileinheit 1 beschrieben, die nachfolgend beispielhaft zur Erläuterung des Aufbaus und der Anordnung eines erfindungsgemäßen Schalldämpfers verwendet wird. Die Ventileinheit 1 ist in Fig. 8 in einem ersten vertikalen Längsschnitt VIII - VIII gemäß Fig. 10, in Fig. 9 in einem zweiten vertikalen Längsschnitt IX - IX gemäß Fig. 10, und in Fig. 10 in einem Horizontalschnitt X - X gemäß Fig. 8 und Fig. 9 abgebildet.

In einem länglichen Ventilgehäuse 2 sind ein Bremsdruckeingang 3, ein Bremsdruckausgang 4 und ein Entlüftungsausgang 5, sowie ein als Membranventil ausgebildetes Einlassventil 6, ein als Membranventil ausgebildetes Auslassventil 7, und jeweils ein als 3/2-Wege-Magnetventil ausgebildetes Vorsteuerventil 8, 9 für jedes Membranventil 6, 7 angeordnet. Das Ventilgehäuse 2 ist mit einer in Einbaulage weitgehend horizontalen Teilungsebene 10 in ein Basisgehäuse 11 und einen Gehäusedeckel 12 unterteilt. Der Bremsdruckeingang 3 und der Bremsdruckausgang 4 sind in Längsrichtung 13 des Ventilgehäuses 2 mit horizontaler Ausrichtung weitgehend axial gegenüberliegend und der Entlüftungsausgang 5 dazwischen vertikal nach unten gerichtet in dem Basisgehäuse 11 angeordnet. Die beiden Membranventile 6, 7 sind in dem Basisgehäuse 11 zwischen dem Bremsdruckeingang 3 und dem Bremsdruckausgang 4 mit parallelen Betätigungsachsen 14, 15 und einer Anordnung der Membranen 16, 17 in einer gemeinsamen, weitgehend der Teilungsebene 10 entsprechenden Membranebene unter Einspannung zwischen dem Basisgehäuse 11 und dem Gehäusedeckel 12 in Längsrichtung 13 hintereinander angeordnet. Die Vorsteuerventile 8, 9 sind dagegen in dem Gehäusedeckel 12 angeordnet.

Das Vorsteuerventil 8 des Einlassventils 6 und das Vorsteuerventil 9 des Auslassventils 7 sind in Längsrichtung 13 mit paralleler Ausrichtung ihrer Betätigungsachsen 18, 19 zu der Teilungsebene 10 weitgehend mittig über den Membranen 16, 17 des Einlassventils 6 und des Auslassventils 7 in dem Gehäusedeckel 12 angeordnet. Der Gehäusedeckel 12 weist ein zentrales, mit Ventilbohrungen 20, 21; 22, 23 und Steuerkanälen 24, 25, 26; 27, 28, 29 versehenes Einlegeteil 30 auf, in das die Magnetspulen 31, 32 und die mechanischen Bauteile der Vorsteuerventile 8, 9, wie der jeweilige Ventilkern 33, 36, der jeweilige Ventilanker 34, 37, und die jeweilige Ventilfeder 35, 38 eingesetzt sind, und das mit einem Kunststoff 39 umspritzt ist.

Vorliegend sind die Vorsteuerventile 8, 9 als separate Magnetventile ausgebildet, die mit entgegengesetzter Schaltrichtung und jeweils der Membran 16, 17 des zugeordneten Einlassventils oder Auslassventils 6, 7 zugewandtem Ventilsitz 40, 41 achsparallel und radial benachbart zueinander in dem Einlegeteil 30 angeordnet sind. Das Einlegeteil 30 besteht aus einem eingangseitigen Teil 42 und einem ausgangsseitigen Teil 43, welche die Magnetspulen 31, 32 und die mechanischen Bauteile 33 - 35; 36 - 38 der Magnetventile 8, 9 stirnseitig umfassen. Innerhalb der Umspritzung 39 des Gehäusedeckels 12 sind Anschlusskabel 44 der Magnetspulen 31, 32 verlegt, die in einer mit der Umspritzung 39 angeformten Anschlussbuchse 45 enden.

Die Membranen 16, 17 des Einlassventils 6 und des Auslassventils 7 liegen aufgrund ihrer Formgebung jeweils an einem Ventilsitz 46, 47 eines zylindrischen Zentralkanals 48, 49 an, der jeweils durch die Beaufschlagung einer von der betreffenden Membran 16, 17 und einer der Teilungsebene 10 zugewandten Innenwand 50 des Gehäusedeckels 12 begrenzten Steuerkammer 51, 52 mit einem niedrigen oder hohen Steuerdruck mit einem koaxial zu diesem angeordneten zylindrischen Ringkanal 53, 54 verbindbar oder gegenüber diesem absperrbar ist. Der Ringkanal 53 des Einlassventils 6 ist mit dem Bremsdruckeingang 3 verbunden. Der Zentralkanal 48 des Einlassventils 6 steht über einen Verbindungskanal 55 mit dem Ringkanal 54 des Auslassventils 7 in Verbindung, der wiederum mit dem Bremsdruckausgang 4 verbunden ist. Der Zentralkanal 49 des Auslassventils 7 ist mit dem Entlüftungsausgang 5 verbunden. Somit ist der Bremsdruckausgang 4 über das Einlassventil 6 wechselweise mit dem Bremsdruckeingang 3 verbindbar oder gegenüber diesem absperrbar. Ebenso ist der Bremsdruckausgang 4 über das Auslassventil 7 wechselweise mit dem Entlüftungsausgang 5 verbindbar oder gegenüber diesem absperrbar. In der vorliegenden Ausführung der Ventileinheit 1 reicht das Einlegeteil 30 des Gehäusedeckels 12 bis an die Teilungsebene 10 zwischen dem Basisgehäuse 11 und dem Gehäusedeckel 12 heran und begrenzt die Steuerkammern 51, 52 der Membranventile 8, 9 vollständig.

Die Ventileinheit 1 weist die Schaltfunktionen "Druckaufbau", "Druckhalten" und "Druckabbau" auf. In der Schaltfunktion "Druckaufbau" der Ventileinheit 1 sind das Einlassventil 6 geöffnet und das Auslassventil 7 geschlossen, so dass der über ein Bremsventil am Bremsdruckeingang 3 eingesteuerte Bremsdruck unverändert an den Bremsdruckausgang 4 und an mindestens einen daran angeschlossenen Radbremszylinder weitergeleitet wird. Da die Schaltfunktion "Druckaufbau" dem Ruhezustand der Ventileinheit 1 entspricht, verbindet das Vorsteuerventil 8 des Einlassventils 6 im unbestromten Zustand seiner Magnetspule 31 die Steuerkammer 51 des Einlassventils 6 über den Steuerkanal 24, die Ventilbohrung 21, Längsnuten 57 in dem Ventilanker 34 und eine Zentralbohrung 56 in dem Ventilkern 33 mit einem einen niedrigen Steuerdruck führenden Steuerkanal 25, der in nicht dargestellter Weise an den Entlüftungsausgang 5 angeschlossen ist.

Die in Fig. 8 und Fig. 9 aufgrund ihrer Formgebung an dem Ventilsitz 46 des Einlassventils 6 anliegend dargestellte Membran 16 wird in diesem Fall durch einen in dem Ringkanal 53 vorliegenden Bremsdruck in Richtung der Steuerkammer 51 verschoben, wodurch das Einlassventil 6 geöffnet wird. Ebenso verbindet das Vorsteuerventil 9 des Auslassventils 7 im unbestromten Zustand seiner Magnetspule 32 die Steuerkammer 52 des Auslassventils 7 über den Steuerkanal 27, die Ventilbohrung 23, Längsnuten 59 in dem Ventilanker 37 und eine Zentralbohrung 58 in dem Ventilkern 36 mit einem einen hohen Steuerdruck führenden Steuerkanal 29, der über einen weiteren, in dem Basisgehäuse 11 angeordneten Steuerkanal 61 an den Bremsdruckeingang 3 angeschlossen ist.

In der Schaltfunktion "Druckhalten" der Ventileinheit 1 sind das Einlassventil 6 und das Auslassventil 7 geschlossen, so dass der am Bremsdruckausgang 4 und dem mindestens einen daran angeschlossenen Radbremszylinder anliegende Bremsdruck dann konstant gehalten wird. Zur Einstellung dieser Schaltfunktion wird nur das Vorsteuerventil 8 des Einlassventils 6 durch Bestromung seiner Magnetspule 31 umgeschaltet, wodurch der betreffende Ventilanker 34 entgegen der Rückstellkraft der Ventilfeder 35 axial von dem Ventilsitz 40 nach innen gezogen wird. Dadurch wird die Steuerkammer 50 des Einlassventils 6 über den Steuerkanal 24 und die Ventilbohrung 21 mit einem den hohen Steuerdruck führenden Steuerkanal 26 verbunden, der über einen weiteren, in dem Basisgehäuse 11 angeordneten Steuerkanal 60 an den Bremsdruckeingang 3 angeschlossen ist.

In der Schaltfunktion "Druckabbau" der Ventileinheit 1 sind das Einlassventil 6 geschlossen und das Auslassventil 7 geöffnet, so dass der Bremsdruckausgang 4 und der mindestens eine daran angeschlossene Radbremszylinder dann über den Entlüftungsausgang 5 entlüftet werden. Zur Einstellung dieser Schaltfunktion werden beide Vorsteuerventile 8, 9 durch Bestromung ihrer Magnetspulen 31, 32 umgeschaltet. Durch die Bestromung der Magnetspule 32 des dem Auslassventil 7 zugeordneten Vorsteuerventils 9 wird der betreffende Ventilanker 37 entgegen der Rückstellkraft der Ventilfeder 38 axial von dem Ventilsitz 41 nach innen gezogen, wodurch die Steuerkammer 52 des Auslassventils 7 über den Steuerkanal 27 und die Ventilbohrung 24 mit einem den niedrigen Steuerdruck führenden Steuerkanal 28 verbunden wird, der in nicht dargestellter Weise an den Entlüftungsausgang 5 angeschlossen ist.

Die Schaltfunktionen "Druckhalten" und "Druckabbau" der Ventileinheit 1 sind Blockierschutzfunktionen, mit denen ein bremsbedingtes Blockieren des mindestens einen zugeordneten Fahrzeugrades vermieden werden soll. Diese Schaltfunktionen werden durch eine entsprechende Ansteuerung der Vorsteuerventile 8, 9 von einem Steuergerät eines Antiblockiersystems gesteuert, in dem die Signale von Raddrehzahlsensoren zur Erkennung eines bevorstehenden oder schon eingetretenen Blockierens der gebremsten Räder ausgewertet werden.

Durch die in Einbaulage der Ventileinheit 1 liegende, also in Längsrichtung 13 zu der Teilungsebene 10 des Ventilgehäuses 2 parallele Anordnung der Vorsteuerventile 8, 9 ergibt sich eine sehr niedrige Bauhöhe des Ventildeckels 12 und damit besonders kompakte Abmessungen der gesamten Ventileinheit 1. Dies ist besonders vorteilhaft, da derartige Ventileinheiten 1 zur Erzielung einer kurzen Reaktionszeit der betreffenden Radbremsen bei der Steuerung der Blockierschutzfunktionen möglichst nahe an den zugeordneten Radbremszylindern angeordnet sind, und der dort verfügbare Bauraum zumeist gering ist.

Durch die Ausrichtung der Magnetventile 8, 9 mit benachbart zu den Membranen 16, 17 beziehungsweise den Steuerkammern 50, 51 der zugeordneten Membranventile 6, 7 angeordneten Ventilsitzen 40, 41 ergeben sich für beide Vorsteuerventile 8, 9 besonders kleine, beim Umschalten zu belüftende oder zu entlüftende Pilotvolumina. Dies hat vorteilhaft besonders kurze Schaltreaktionszeiten der Membranventile 6, 7 beim Umschalten der Magnetventile 8, 9 zur Folge.

Durch die Umspritzung 39 des die Magnetspulen 31, 32 und die mechanischen Bauteile 33 - 35, 36 - 38 der Vorsteuerventile 8, 9 enthaltenden Einlegeteils 30 ist die Montage der Ventileinheit 1 sowie deren Revision, bei der insbesondere die Membranen 16, 17 durch neue Exemplare ersetzt werden, wesentlich vereinfacht. Zudem kann mit der Kunststoffumspritzung 39 des Einlegeteils 30 die Anschlussbuchse 45 der Magnetspulen 31, 32 entsprechend der Anforderung des jeweiligen Fahrzeugherstellers flexibel, also bedarfsweise mit unterschiedlicher Buchsenform und unterschiedlicher Ausrichtung, an verschiedenen Orten des Gehäusedeckels 12 angeordnet werden. Zudem sind die Magnetventile 8, 9 durch die Umspritzung 39 optimal gegen von außen eindringende Feuchtigkeit und Schmutzpartikel geschützt.

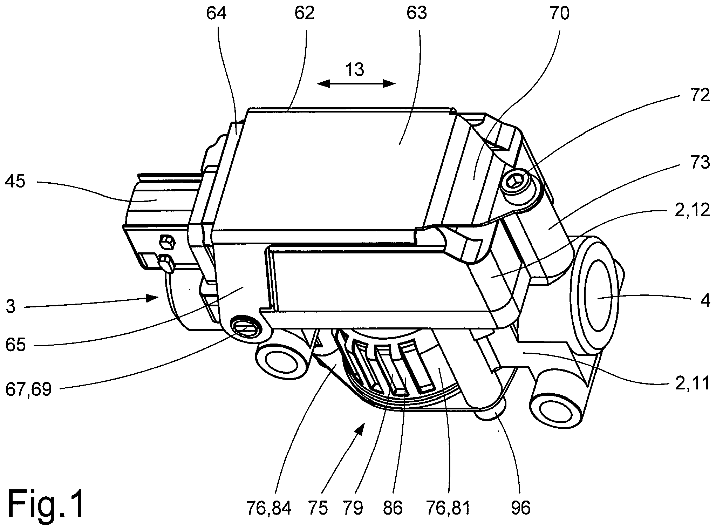

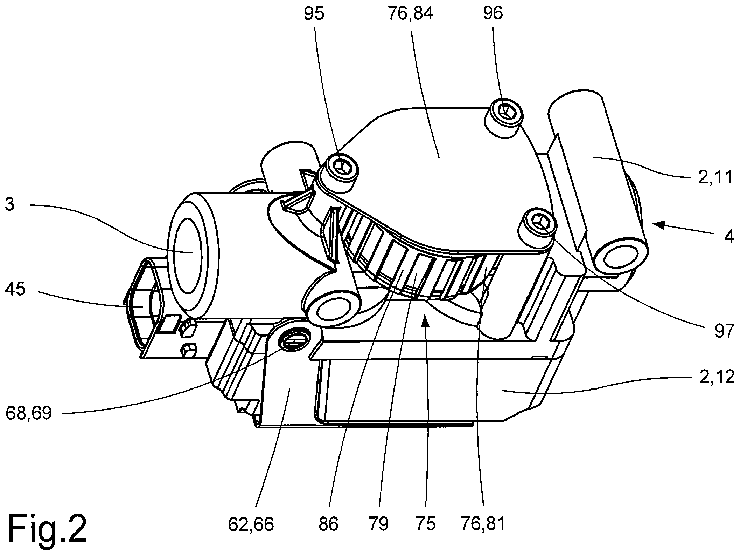

In den Figuren 1 bis 4 ist in zwei perspektivischen Ansichten und zwei Schnittansichten eine bevorzugte praktische Ausführungsform der Ventileinheit 1 abgebildet, bei welcher die Anschlussbuchse 45 für die Magnetspulen 31, 32 der Vorsteuerventile 8, 9 nahe des Bremsdruckeingangs 3 an dem Gehäusedeckel 12 angeordnet ist, der Gehäusedeckel 12 mittels eines Bügelelements 62 mit dem Basisgehäuse 11 verbunden ist, und das Basisgehäuse 11 am Entlüftungsausgang 5 mit einem Schalldämpfer 75 verbunden ist.

Das einstückig als Blechpress- und Blechstanzbauteil hergestellte Bügelelement 62 ist an dem Basisgehäuse 11 befestigt und liegt mit seiner weitgehend ebenen Druckplatte 63 unter Erzeugung einer federelastischen Vorspannkraft an einer parallel zu der Teilungsebene 10 des Ventilgehäuses 2 ausgerichteten ebenen Außenwand 64 des Gehäusedeckels 12 an. In Längsrichtung 13 des Ventilgehäuses 2 ist das Bügelelement 62 einseitig mit zwei Gelenkarmen 65, 66 versehen, die den Gehäusedeckel 12 und das Basisgehäuse 11 seitlich umfassen und über eine jeweils in eine Gelenkbohrung 67, 68 eingreifende Gelenkachse 69 schwenkbar an dem Basisgehäuse 12 befestigt sind. In Längsrichtung 13 den Gelenkarmen 65, 66 gegenüberliegend ist das Bügelelement 62 mit einer Befestigungslasche 70 versehen, die weitgehend parallel zu der Druckplatte 63 ausgerichtet ist und eine Bohrung 71 aufweist, über die das Bügelelement 62 mittels einer Schraube 72 unter Erzeugung einer federelastischen Vorspannkraft mit dem Basisgehäuse 11 verschraubt ist. Um die Befestigungslasche 70 kleiner und damit das Bügelelement 62 stabiler ausführen zu können, weist das Basisgehäuse 11 in Längsrichtung 13 der Gelenkachse 69 gegenüberliegend einen pfostenförmigen Vorsprung 73 auf, der die Teilungsebene 10 senkrecht in Richtung des Gehäusedeckels 12 überragt und mit einer Gewindebohrung 74 zur Verschraubung der Befestigungslasche 70 versehen ist.

Gegenüber einer üblichen Flanschverschraubung des Gehäusedeckels 12 mit dem Basisgehäuse 11 ist die Befestigung über das Bügelelement 62 kostengünstiger herstellbar und erfordert weniger Bauraum. Zudem kann das Ventilgehäuse 2 dadurch für Wartungs- und Reparaturzwecke, insbesondere für eine Revision der Ventileinheit, bei der beispielsweise die Membranen der Membranventile 6, 7 erneuert werden können, mit geringerem Montageaufwand geöffnet und anschließend wieder geschlossen werden.

Der Schalldämpfer 75 weist ein weitgehend zylindrisches Schalldämpfergehäuse 76 mit einer Eintrittsöffnung 77, einer radial innen angeordneten Beruhigungskammer 78, einer großflächigen Austrittsöffnung 79, und einer der Austrittsöffnung 79 innerhalb des Schalldämpfergehäuses 76 vorgelagerten Schalldämpfungseinlage 80.1 aus einer luftdurchlässigen sowie schalldämpfenden Materialanordnung auf, und ist mit parallel zu der Teilungsebene 10 des Ventilgehäuses 2 ausgerichteten Basiswänden 83, 84 zwischen dem Bremsdruckeingang 3 und dem Bremsdruckausgang 4 an dem Basisgehäuse 11 befestigt.

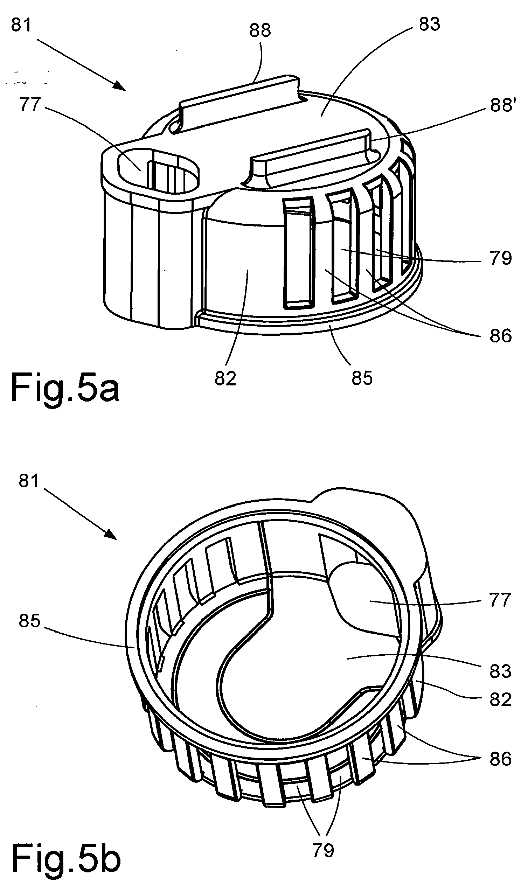

Wie insbesondere aus den perspektivischen Ansichten von Fig. 5a und Fig. 5b hervorgeht, besteht das Schalldämpfergehäuse 76 aus einem weitgehend topfzylindrischen Grundgehäuse 81 mit einer Zylinderwand 82, einem Gehäuseboden 83 und mit einem ebenen Gehäusedeckel 84. Der Gehäuseboden 83 des Grundgehäuses 81 ist im eingebauten Zustand der Teilungsebene 10 des Ventilgehäuses 2 zugewandt und mit der an dem Entlüftungsausgang 5 anliegenden Eintrittsöffnung 77 versehen. Die Austrittsöffnung 79 des Schalldämpfergehäuses 76 ist in der Zylinderwand 82 des Grundgehäuses 81 ausgebildet und erstreckt sich mit einer Ausrichtung hin zu dem Bremsdruckeingang 3 über einen Winkelbereich von etwa 270°. Um trotz der großflächigen Austrittsöffnung 79 eine ausreichende Stabilität des Schalldämpfergehäuses 76 und Abstützung der Schalldämpfungseinlage 80.1 zu erreichen, ist die Austrittsöffnung 79 durch mehrere über den Umfang verteilt zwischen dem Gehäuseboden 83 und einem Außenrand 85 des Grundgehäuses 81 angeordneten Stegen 86 unterteilt.

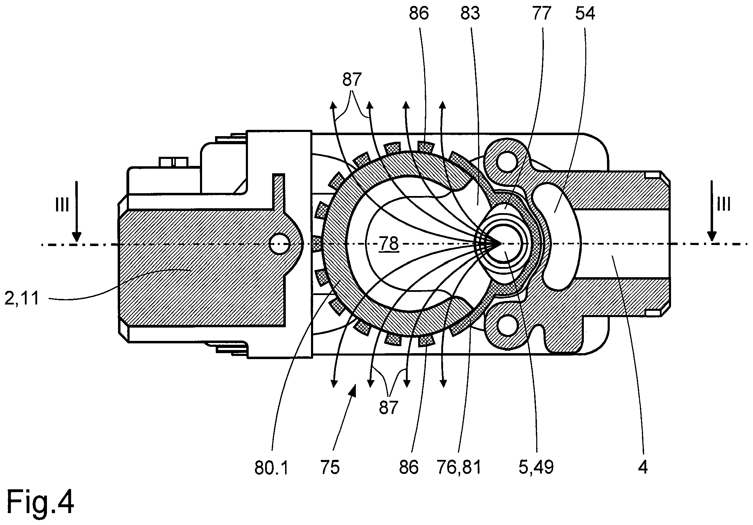

Bei geöffnetem Auslassventil 7 strömt Druckluft mit relativ hohem Druck aus dem an den Bremsdruckausgang 4 angeschlossenen Bremsleitungsabschnitt entsprechend den in der Schnittansicht von Fig. 4 eingezeichneten Strömungspfeilen 87 über den Entlüftungsausgang 5 und die Eintrittsöffnung 77 in die Beruhigungskammer 78 des Schalldämpfers 75, und von dort über die Schalldämpfungseinlage 80.1 und die Austrittsöffnung 79 in die Umgebung. Durch das relativ große Volumen der Beruhigungskammer 78, die großflächige Austrittsöffnung 79, und die schalldämpfende Materialanordnung der Schalldämpfungseinlage 80.1 wird die Strömungsgeschwindigkeit der Druckluft reduziert und vergleichmäßig. Dadurch werden die Geräusche der austretenden Druckluft, die bei einem mit hoher Strömungsgeschwindigkeit am Bremsdruckausgang 4 unmittelbar in die Umgebung austretenden Druckluftstrahl im wesentlichen durch Verwirbelungen am Strahlrand hervorgerufen werden, mit relativ einfachen Mitteln deutlich reduziert. Zusätzlich wird der Entlüftungsausgang 5 und das diesem vorgeschaltete Auslassventil 7 insbesondere durch die Schalldämpfungseinlage 80.1 des Schalldämpfers 75 auch gegen das Eindringen von Spritzwasser und von aufgewirbelten Schmutzpartikeln geschützt.

Wie in der perspektivischen Ansicht von Fig. 5a erkennbar ist, weist der Gehäuseboden 83 zur Montageerleichterung und Lagefixierung des Grundgehäuses 81 zwei in Längsrichtung 13 verlaufende, axial nach außen gerichtete, also im eingebauten Zustand in Richtung der Teilungsebene 10 des Ventilgehäuses 2 weisende Stege 88, 88' auf, die im eingebauten Zustand in entsprechend ausgebildete nutförmige Ausnehmungen des Basisgehäuses 11 eingreifen.

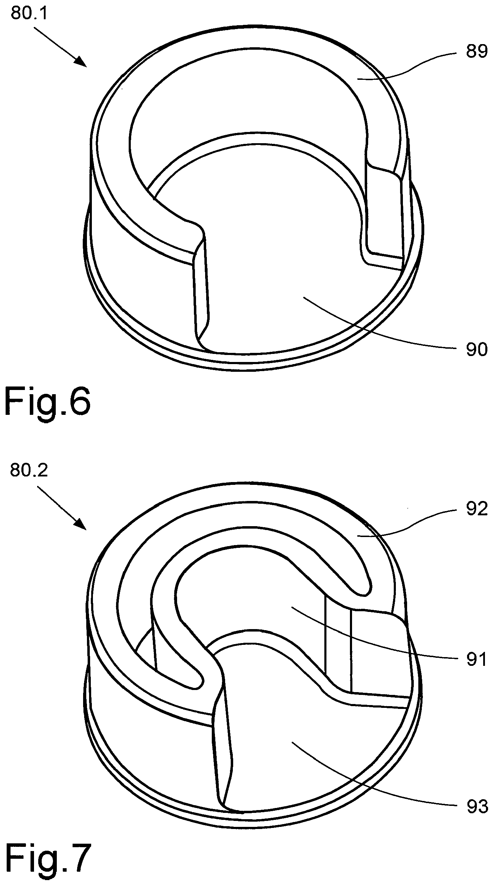

Eine erste Ausführungsform der Schalldämpfungseinlage 80.1 gemäß Fig. 6 weist eine teilzylindrische Schale 89 auf, die im montierten Zustand innen an der Austrittsöffnung 79 des Schalldämpfergehäuses 76 anliegt und durch einen kreisflächenförmigen Bodenabschnitt 90 versteift ist.

Eine zweite Ausführungsform der Schalldämpfungseinlage 80.2 gemäß Fig. 7 weist zwei teilzylindrische Schalen 91, 92 auf, die koaxial zueinander und radial beabstandet voneinander angeordnet sind, die durch einen kreisflächenförmigen Bodenabschnitt 93 sowie umfangsseitig unmittelbar miteinander verbunden sind, und von denen die radial äußere Schale 92 im montierten Zustand innen an der Austrittsöffnung 79 des Schalldämpfergehäuses 76 anliegt.

Die Schalldämpfungseinlage 80.1, 80.2 kann jeweils als Geflecht aus Mineralfasern, Metallfasern, oder Kunststofffasern, als Sinterbauteil aus Metall oder Kunststoff, oder als poröses Gussteil aus Metall oder Kunststoff hergestellt sein.

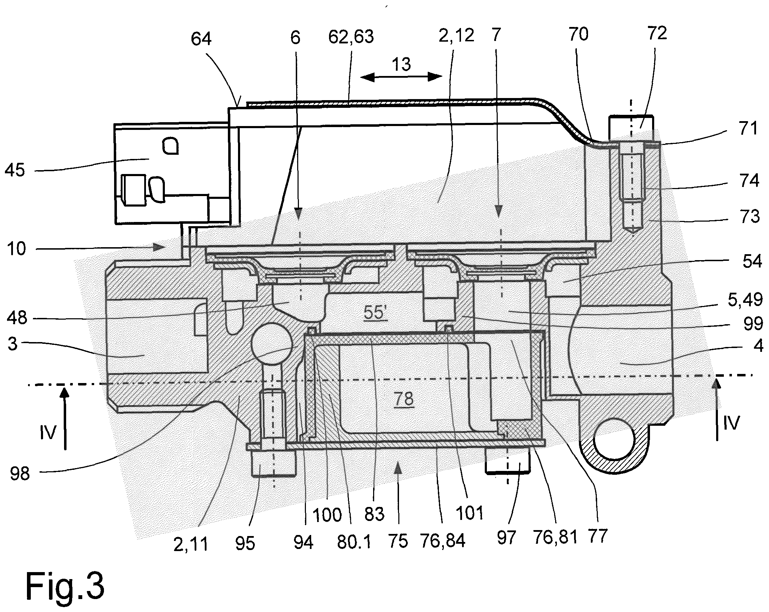

Wie besonders gut in der Schnittansicht von Fig. 3 erkennbar ist, in der das Basisgehäuse 11 und das Bügelelement 62 in einem Längsmittelschnitt und der Gehäusedeckel 12 in einer Seitenansicht dargestellt sind, weist das Basisgehäuse 11 auf seiner der Teilungsebene 10 abgewandten Unterseite eine Ausnehmung 94 auf, in die das Schalldämpfergehäuse 76 größtenteils eingesetzt ist. Hierdurch ist erreicht, dass die Abmessungen der Ventileinheit 1 durch den Schalldämpfer 75 im Vergleich zu einer Ventileinheit ohne Schalldämpfer kaum vergrößert sind. Das Schalldämpfergehäuse 76 ist indirekt über eine vorliegend drei Schrauben 95, 96, 97 umfassende Verschraubung des Gehäusedeckels 84 des Schalldämpfergehäuses 76 mit dem Basisgehäuse 11 an dem Ventilgehäuse 2 befestigt. Dadurch wird gegenüber einer separaten Befestigung des Gehäusedeckels 84 des Schalldämpfergehäuses 76 an dem Grundgehäuse 81 und des gesamten Schalldämpfergehäuses 76 an dem Basisgehäuse 11 Bauraum eingespart und der Montageaufwand reduziert.

In der Schnittansicht von Fig. 3 ist auch erkennbar, dass der Verbindungskanal 55', über den der Zentralkanal 48 des Einlassventils 6 mit dem Ringkanal 54 des Auslassventils 7 in Verbindung steht, vorliegend im Gegensatz zu der prinzipiellen Ausführung der Ventileinheit 1 gemäß den Figuren 8 bis 10 nun nach außen offen ausgebildet ist, was bei der üblichen Herstellung des Basisgehäuses 11 als Leichtmetall-Druckgussbauteil den fertigungstechnischen Vorteil einer einfacheren Entkernung hat. Dadurch erfüllt der Gehäuseboden 83 des Grundgehäuses 81 im eingebauten Zustand des Schalldämpfers 75 zusätzlich die Funktion, den Verbindungskanal 55' nach außen zu verschließen. Zur Abdichtung des Verbindungskanals 55' sind zwischen Gehäusewänden 98, 99, durch die der Verbindungskanal 55' begrenzt wird, und dem Gehäuseboden 83 des Grundgehäuses 81 Dichtelemente 100, 101 angeordnet, die vorliegend beispielhaft als in Quernuten der Gehäusewände 98, 99 eingelegte Dichtungsleisten ausgebildet sind.

### Bezugszeichen

- 1: Ventileinheit
- 2: Ventilgehäuse
- 3: Bremsdruckeingang
- 4: Bremsdruckausgang
- 5: Entlüftungsausgang
- 6: Einlassventil, Membranventil
- 7: Auslassventil, Membranventil
- 8: Vorsteuerventil von Einlassventil 6, Magnetventil
- 9: Vorsteuerventil von Auslassventil 7, Magnetventil
- 10: Teilungsebene
- 11: Basisgehäuse
- 12: Gehäusedeckel
- 13: Längsrichtung von Ventilgehäuse 2
- 14: Betätigungsachse von Einlassventil 6
- 15: Betätigungsachse von Auslassventil 7
- 16: Membran von Einlassventil 6
- 17: Membran von Auslassventil 7
- 18: Betätigungsachse von Vorsteuerventil 8
- 19: Betätigungsachse von Vorsteuerventil 9
- 20: Ventilbohrung von Vorsteuerventil 8
- 21: Ventilbohrung von Vorsteuerventil 8
- 22: Ventilbohrung von Vorsteuerventil 9
- 23: Ventilbohrung von Vorsteuerventil 9
- 24: Steuerkanal von Vorsteuerventil 8
- 25: Steuerkanal von Vorsteuerventil 8
- 26: Steuerkanal von Vorsteuerventil 8
- 27: Steuerkanal von Vorsteuerventil 9
- 28: Steuerkanal von Vorsteuerventil 9
- 29: Steuerkanal von Vorsteuerventil 9
- 30: Einlegeteil
- 31: Magnetspule von Vorsteuerventil 8
- 32: Magnetspule von Vorsteuerventil 9
- 33: Ventilkern von Vorsteuerventil 8
- 34: Ventilanker von Vorsteuerventil 8
- 35: Ventilfeder von Vorsteuerventil 8
- 36: Ventilkern von Vorsteuerventil 9
- 37: Ventilanker von Vorsteuerventil 9
- 38: Ventilfeder von Vorsteuerventil 9
- 39: Umspritzung, Kunststoff
- 40: Ventilsitz von Vorsteuerventil 8
- 41: Ventilsitz von Vorsteuerventil 9
- 42: Eingangsseitiger Teil von Einlegeteil 30
- 43: Ausgangsseitiger Teil von Einlegeteil 30
- 44: Anschlusskabel
- 45: Anschlussbuchse
- 46: Ventilsitz von Einlassventil 6
- 47: Ventilsitz von Auslassventil 7
- 48: Zentralkanal von Einlassventil 6
- 49: Zentralkanal von Auslassventil 7
- 50: Innenwand von Gehäusedeckel 12
- 51: Steuerkammer von Einlassventil 6
- 52: Steuerkammer von Auslassventil 7
- 53: Ringkanal von Einlassventil 6
- 54: Ringkanal von Auslassventil 7
- 55,55': Verbindungskanal
- 56: Zentralbohrung von Ventilkern 33
- 57: Längsnut im Ventilanker 34
- 58: Zentralbohrung von Ventilkern 36
- 59: Längsnut von Ventilanker 37
- 60: Steuerkanal von Vorsteuerventil 8
- 61: Steuerkanal von Vorsteuerventil 9
- 62: Bügelelement
- 63: Druckplatte von Bügelelement 62
- 64: Außenwand von Gehäusedeckel 12
- 65: Gelenkarm von Bügelelement 62
- 66: Gelenkarm von Bügelelement 62
- 67: Gelenkbohrung im Gelenkarm 65
- 68: Gelenkbohrung im Gelenkarm 66
- 69: Gelenkachse des Gelenkarms 65, 66
- 70: Befestigungslasche von Bügelelement 62
- 71: Bohrung in Befestigungslasche 70
- 72: Schraube
- 73: Vorsprung von Basisgehäuse 11
- 74: Gewindebohrung im Vorsprung 73
- 75: Schalldämpfer
- 76: Schalldämpfergehäuse
- 77: Eintrittsöffnung
- 78: Beruhigungskammer
- 79: Austrittsöffnung
- 80.1: Schalldämpfungseinlage, erste Ausführung
- 80.2: Schalldämpfungseinlage, zweite Ausführung
- 81: Grundgehäuse des Schalldämpfergehäuses 76
- 82: Zylinderwand des Grundgehäuses 81
- 83: Basiswand bzw. Gehäuseboden des Schalldämpfergehäuses 76
- 84: Basiswand bzw. Gehäusedeckel des Schalldämpfergehäuses 76
- 85: Außenrand des Grundgehäuses 81
- 86: Steg des Grundgehäuses 81
- 87: Strömungspfeil
- 88, 88': Erhebung, Steg von Basiswand 83
- 89: Schale von Schalldämpfungseinlage 80.1
- 90: Bodenabschnitt von Schalldämpfungseinlage 80.1
- 91: Innere Schale von Schalldämpfungseinlage 80.2
- 92: Äußere Schale von Schalldämpfungseinlage 80.2
- 93: Bodenabschnitt von Schalldämpfungseinlage 80.2
- 94: Ausnehmung von Basisgehäuse 11
- 95: Schraube
- 96: Schraube
- 97: Schraube
- 98: Gehäusewand von Basisgehäuse 11
- 99: Gehäusewand von Basisgehäuse 11
- 100: Dichtelement, Dichtungsleiste
- 101: Dichtelement, Dichtungsleiste

## Patentansprüche

1. Ventileinheit (1) zur Druckmodulation in einer Druckluft-Bremsanlage, mit einem Bremsdruckeingang (3), einem Bremsdruckausgang (4) und einem Entlüftungsausgang (5), sowie mit einem als Membranventil ausgebildeten Einlassventil (6), einem als Membranventil ausgebildeten Auslassventil (7) und mit jeweils einem als 3/2-Wege-Magnetventil ausgebildeten Vorsteuerventil (8, 9) für jedes Membranventil (6, 7), welche in einem länglichen Ventilgehäuse (2) angeordnet sind, das mit einer in Einbaulage weitgehend horizontalen Teilungsebene (10) in ein Basisgehäuse (11) und einen Gehäusedeckel (12) unterteilt ist, wobei der Bremsdruckeingang (3) und der Bremsdruckausgang (4) sowie der Entlüftungsausgang (5) in dem Basisgehäuse (11) angeordnet sind, die Membranventile (6, 7) in dem Basisgehäuse (11) zwischen dem Bremsdruckeingang (3) und dem Bremsdruckausgang (4) mit parallelen Betätigungsachsen (14, 15) sowie einer Anordnung der Membranen (16, 17) in einer gemeinsamen, weitgehend der Teilungsebene (10) entsprechenden Membranebene unter Einspannung zwischen dem Basisgehäuse (11) und dem Gehäusedeckel (12) in Längsrichtung (13) hintereinander angeordnet sind, sowie die Vorsteuerventile (8, 9) in dem Gehäusedeckel (12) angeordnet sind, **dadurch gekennzeichnet, dass** die Ventileinheit (1) am Entlüftungsausgang (5) mit einem Schalldämpfer (75) versehen ist, der ein weitgehend zylindrisches Schalldämpfergehäuse (76) mit einer Eintrittsöffnung (77), einer radial innen angeordneten Beruhigungskammer (78), einer großflächigen Austrittsöffnung (79) und einer der Austrittsöffnung (79) innerhalb des Schalldämpfergehäuses (76) vorgelagerten Schalldämpfungseinlage (80.1, 80.2) aus einer luftdurchlässigen sowie schalldämpfenden Materialanordnung aufweist, dass der Schalldämpfer (75) mit parallel zu der Teilungsebene (10) ausgerichteten Basiswänden (83, 84) zwischen dem Bremsdruckeingang (3) und dem Bremsdruckausgang (4) an dem Basisgehäuse (11) befestigt ist, und dass das Schalldämpfergehäuse (76) über eine Verschraubung (95, 96, 97) eines ebenen Gehäusedeckels (84) des Schalldämpfergehäuses (76) mit dem Basisgehäuse (11) an dem Ventilgehäuse (2) befestigt ist.

2. Ventileinheit nach Anspruch 1, **dadurch gekennzeichnet, dass** das Schalldämpfergehäuse (76) aus einem weitgehend topfzylindrischen Grundgehäuse (81) mit einer Zylinderwand (82) und einem Gehäuseboden (83) sowie dem ebenen Gehäusedeckel (84) des Schalldämpfergehäuses (76) besteht, wobei der Gehäuseboden (83) des Grundgehäuses (81) im eingebauten Zustand der Teilungsebene (10) zugewandt und mit der an dem Entlüftungsausgang (5) anliegenden Eintrittsöffnung (77) versehen ist.

3. Ventileinheit nach Anspruch 2, **dadurch gekennzeichnet, dass** die Austrittsöffnung (79) des Schalldämpfergehäuses (76) in der Zylinderwand (82) des Grundgehäuses (81) angeordnet ist und sich mit einer Ausrichtung mit Bezug zu dem Bremsdruckeingang (3) über einen Winkelbereich von bis zu 270° erstreckt.

4. Ventileinheit nach Anspruch 3, **dadurch gekennzeichnet, dass** die Austrittsöffnung (79) von mehreren, über den Umfang des Grundgehäuses (81) verteilt zwischen dem Gehäuseboden (83) und einem Außenrand (85) des Grundgehäuses (81) angeordneten Stegen (86) durchsetzt ist.

5. Ventileinheit nach einem der Ansprüche 2 bis 4, **dadurch gekennzeichnet, dass** der Gehäuseboden (83) des Grundgehäuses (81) mindestens eine axial nach außen gerichtete Erhebung (88, 88') aufweist, die im eingebauten Zustand in eine entsprechende Ausnehmung des Basisgehäuses (11) eingreift.

6. Ventileinheit nach einem der Ansprüche 1 bis 5, **dadurch gekennzeichnet, dass** die Schalldämpfungseinlage (80.1) eine teilzylindrische Schale (89) aufweist, die im montierten Zustand innen an der Austrittsöffnung (79) des Schalldämpfergehäuses (76) anliegt und durch einen kreisflächenförmigen Bodenabschnitt (90) versteift ist.

7. Ventileinheit nach einem der Ansprüche 1 bis 5, **dadurch gekennzeichnet, dass** die Schalldämpfungseinlage (80.2) zwei teilzylindrische Schalen (91, 92) aufweist, die koaxial zueinander und radial beabstandet voneinander angeordnet sind, die durch einen kreisförmigen Bodenabschnitt (93) und umfangsseitig unmittelbar miteinander verbunden sind, und von denen die radial äußere Schale (92) im montierten Zustand innen an der Austrittsöffnung (79) des Schalldämpfergehäuses (76) anliegt.

8. Ventileinheit nach einem der Ansprüche 1 bis 7, **dadurch gekennzeichnet, dass** die Schalldämpfungseinlage (80.1, 80.2) als Geflecht aus Mineralfasern, Metallfasern, oder Kunststofffasern hergestellt ist.

9. Ventileinheit nach einem der Ansprüche 1 bis 7, **dadurch gekennzeichnet, dass** die Schalldämpfungseinlage (80.1, 80.2) als Sinterbauteil aus Metall oder Kunststoff hergestellt ist.

10. Ventileinheit nach einem der Ansprüche 1 bis 7, **dadurch gekennzeichnet, dass** die Schalldämpfungseinlage (80.1, 80.2) als poröses Gussteil aus Metall oder Kunststoff hergestellt ist.

11. Ventileinheit nach einem der Ansprüche 1 bis 10, **dadurch gekennzeichnet, dass** das Basisgehäuse (11) der Ventileinheit (1) an seiner von der Teilungsebene (10) abgewandten Unterseite eine Ausnehmung (94) aufweist, in die das Schalldämpfergehäuse (76) im eingebauten Zustand zumindest teilweise eingesetzt ist.

12. Ventileinheit nach Anspruch 2 und eventuell einem der Ansprüche 3 bis 11, **dadurch gekennzeichnet, dass** ein zum Schalldämpfer (75) benachbarter, nach außen offener Verbindungskanal (55') des Basisgehäuses (11) im eingebauten Zustand durch den Gehäuseboden (83) des Schalldämpfergehäuses (76) verschlossen ist, und dass zwischen den Verbindungskanal (55') begrenzenden Gehäusewänden (98, 99) des Basisgehäuses (11) und dem Gehäuseboden (83) Dichtelemente (100, 101) angeordnet sind.

## Claims

1. Valve unit (1) for modulating pressure in a compressed air braking system, with a brake pressure input (3), a brake pressure output (4) and a purge output (5), and with an inlet valve (6) configured as a diaphragm valve, an outlet valve (7) configured as a diaphragm valve and with, for each diaphragm valve (6, 7), respective precontrol valves (8, 9) which are each configured as a 3/2-way solenoid valve and are arranged in an elongate valve housing (2) that is divided by a division plane (10) which is largely horizontal in the installation position into a base housing (11) and a housing cover (12), wherein the brake pressure input (3) and the brake pressure output (4) and the purge output (5) are arranged in the base housing (11), the diaphragm valves (6, 7) are arranged behind each other in the longitudinal direction (13) in the base housing (11) between the brake pressure input (3) and the brake pressure output (4), with parallel actuation axes (14, 15) and with an arrangement of the diaphragms (16, 17) in a common diaphragm plane largely corresponding to the division plane (10) and clamped between the base housing (11) and the housing cover (12), and the precontrol valves (8, 9) are arranged in the housing cover (12), **characterized in that** the valve unit (1) at the purge output (5) is provided with a silencer (75) which comprises a largely cylindrical silencer housing (76) with an inlet opening (77), a calming chamber (78) arranged radially on the inside, a large outlet opening (79) and a silencer insert (80.1, 80.2) arranged upstream of the outlet opening (79) inside the silencer housing (76) and made of an air-permeable and sound-deadening material, **in that** the silencer (75) is attached to the base housing (11) with base walls (83, 84) oriented parallel to the division plane (10) between the brake pressure input (3) and the brake pressure output (4), and **in that** the silencer housing (76) is fixed to the valve housing (2) by a screw connection (95, 96, 97) of a flat housing lid (84) of the silencer housing (76) to the base housing (11).

2. Valve unit according to Claim 1, **characterized in that** the silencer housing (76) consists of a largely pot-like cylindrical bottom housing (81) with a cylinder wall (82) and a housing floor (83), and of the flat housing lid (84) of the silencer housing (76), wherein in the installed state, the housing floor (83) of the bottom housing (81) faces the division plane (10) and is provided with the inlet opening (77) lying against the purge output (5).

3. Valve unit according to Claim 2, **characterized in that** the outlet opening (79) of the silencer housing (76) is arranged in the cylinder wall (82) of the bottom housing (81) and extends, with an orientation relative to the brake pressure input (3), over an angular region of up to 270°.

4. Valve unit according to Claim 3, **characterized in that** the outlet opening (79) contains a plurality of webs (86) which are evenly distributed over the periphery of the bottom housing (81) and arranged between the housing floor (83) and an outer edge (85) of the bottom housing (81).

5. Valve unit according to any of Claims 2 to 4, **characterized in that** the housing floor (83) of the base housing (81) comprises at least one elevation (88, 88') directed axially outward, which in the installed state engages in a corresponding recess in the base housing (11).

6. Valve unit according to any of Claims 1 to 5, **characterized in that** the silencer insert (80.1) has a partially cylindrical shell (89) which in the installed state, lies on the inside against the outlet opening (79) of the silencer housing (76) and is reinforced by a circular flat floor portion (90).

7. Valve unit according to any of Claims 1 to 5, **characterized in that** the silencer insert (80.2) has two partially cylindrical shells (91, 92) which are arranged coaxially to each other and radially spaced apart, and are connected by a circular floor portion (93) and circumferentially directly connected together, and of which the radially outer shell (92), in the installed state, lies on the inside against the outlet opening (79) of the silencer housing (76).

8. Valve unit according to any of Claims 1 to 7, **characterized in that** the silencer insert (80.1, 80.2) is made as a braid of mineral fibers, metal fibers or plastic fibers.

9. Valve unit according to any of Claims 1 to 7, **characterized in that** the silencer insert (80.1, 80.2) is made as a sintered component of metal or plastic.

10. Valve unit according to any of Claims 1 to 7, **characterized in that** the silencer insert (80.1, 80.2) is made as a porous casting of metal or plastic.

11. Valve unit according to any of Claims 1 to 10, **characterized in that** on its underside facing away from the division plane (10), the base housing (11) of the valve unit (1) has a recess (94) in which the silencer housing (76) is at least partially inserted in the installed state.

12. Valve unit according to Claim 2 and possibly any of Claims 3 to 11, **characterized in that** a connecting channel (55'), adjacent to the silencer (75) and open to the outside, of the base housing (11) is closed in the installed state by the housing floor (83) of the silencer housing (76), and that sealing elements (100, 101) are arranged between the housing walls (98, 99) of the base housing (11) delimiting the connecting channel (55') and the housing floor (83).

## Revendications

1. Unité de soupape (1) pour la modulation de pression dans une installation de freinage à air comprimé, comprenant une entrée de pression de freinage (3), une sortie de pression de freinage (4) et une sortie de désaérage (5), ainsi qu'une soupape d'entrée (6) réalisée sous forme de soupape à membrane, une soupape de sortie (7) réalisée sous forme de soupape à membrane et à chaque fois une soupape pilote (8, 9) réalisée sous forme d'électrovanne à 3/2 voies pour chaque soupape à membrane (6, 7), lesquelles sont disposées dans un boîtier de soupape allongé (2) qui est divisé, par un plan de séparation (10) essentiellement horizontal dans la position d'installation, en un boîtier de base (11) et un couvercle de boîtier (12), l'entrée de pression de freinage (3) et la sortie de pression de freinage (4) ainsi que la sortie de désaérage (5) étant disposées dans le boîtier de base (11), les soupapes à membrane (6, 7) étant disposées les unes derrière les autres dans le boîtier de base (11) entre l'entrée de pression de freinage (3) et la sortie de pression de freinage (4) avec des axes d'actionnement parallèles (14, 15) et un agencement des membranes (16, 17) dans un plan de membranes commun, correspondant essentiellement au plan de séparation (10), par serrage entre le boîtier de base (11) et le couvercle de boîtier (12) dans la direction longitudinale (13), et les soupapes pilotes (8, 9) étant disposées dans le couvercle de boîtier (12), **caractérisée en ce que** l'unité de soupape (1) est pourvue, au niveau de la sortie de désaérage (5), d'un silencieux (75), qui présente un boîtier de silencieux essentiellement cylindrique (76) avec une ouverture d'entrée (77), une chambre de tranquillisation (78) disposée radialement à l'intérieur, une ouverture de sortie de grande surface (79) et un insert de silencieux (80.1, 80.2) monté en amont de l'ouverture de sortie (79) à l'intérieur du boîtier de silencieux (76), constitué d'un agencement de matériau perméable à l'air et atténuant les sons, **en ce que** le silencieux (75) est fixé avec des parois de base (83, 84) orientées parallèlement au plan de séparation (10) entre l'entrée de pression de freinage (3) et la sortie de pression de freinage (4) au boîtier de base (11) et **en ce que** le boîtier de silencieux (76) est fixé par le biais d'un vissage (95, 96, 97) d'un couvercle de boîtier plan (84) du boîtier de silencieux (76) au boîtier de base (11) au niveau du boîtier de soupape (2).

2. Unité de soupape selon la revendication 1, **caractérisée en ce que** le boîtier de silencieux (76) se compose d'un boîtier principal (81) essentiellement cylindrique en forme de pot avec une paroi de cylindre (82) et un fond de boîtier (83) ainsi que du couvercle de boîtier plan (84) du boîtier de silencieux (76), le fond de boîtier (83) du boîtier principal (81), dans l'état installé, étant tourné vers le plan de séparation (10) et étant pourvu de l'ouverture d'entrée (77) s'appliquant contre la sortie de désaérage (5).

3. Unité de soupape selon la revendication 2, **caractérisée en ce que** l'ouverture de sortie (79) du boîtier de silencieux (76) est disposée dans la paroi cylindrique (82) du boîtier principal (81) et s'étend avec une orientation par rapport à l'entrée de pression de freinage (3) sur une plage angulaire allant jusqu'à 270°.

4. Unité de soupape selon la revendication 3, **caractérisée en ce que** l'ouverture de sortie (79) est traversée par plusieurs nervures (86) réparties sur la périphérie du boîtier principal (81), disposées entre le fond de boîtier (83) et un bord extérieur (85) du boîtier principal (81).

5. Unité de soupape selon l'une quelconque des revendications 2 à 4, **caractérisée en ce que** le fond de boîtier (83) du boîtier principal (81) présente au moins un rehaussement (88, 88') orienté axialement vers l'extérieur, qui s'engage, dans l'état installé, dans un évidement correspondant du boîtier de base (11).

6. Unité de soupape selon l'une quelconque des revendications 1 à 5, **caractérisée en ce que** l'insert de silencieux (80.1) présente une coque partiellement cylindrique (89) qui, dans l'état monté, s'applique à l'intérieur contre l'ouverture de sortie (79) du boîtier de silencieux (76) et est renforcée par une portion de fond (90) en forme de surface circulaire.

7. Unité de soupape selon l'une quelconque des revendications 1 à 5, **caractérisée en ce que** l'insert de silencieux (80.2) présente deux coques partiellement cylindriques (91, 92) qui sont disposées coaxialement l'une par rapport à l'autre et à distance radiale l'une de l'autre, qui sont raccordées l'une à l'autre par une portion de fond de forme circulaire (93) et directement du côté de la périphérie, et dont la coque radialement extérieure (92) s'applique dans l'état monté à l'intérieur contre l'ouverture de sortie (79) du boîtier de silencieux (76).

8. Unité de soupape selon l'une quelconque des revendications 1 à 7, **caractérisée en ce que** l'insert de silencieux (80.1, 80.2) est fabriqué sous forme de treillis constitué de fibres minérales, de fibres métalliques ou de fibres synthétiques.

9. Unité de soupape selon l'une quelconque des revendications 1 à 7, **caractérisée en ce que** l'insert de silencieux (80.1, 80.2) est fabriqué sous forme de composant fritté en métal ou en plastique.

10. Unité de soupape selon l'une quelconque des revendications 1 à 7, **caractérisée en ce que** l'insert de silencieux (80.1, 80.2) est fabriqué sous forme de pièce coulée poreuse en métal ou en plastique.

11. Unité de soupape selon l'une quelconque des revendications 1 à 10, **caractérisée en ce que** le boîtier de base (11) de l'unité de soupape (1) présente, au niveau de son côté inférieur opposé au plan de séparation (10), un évidement (94) dans lequel est inséré au moins en partie le boîtier de silencieux (76), dans l'état installé.

12. Unité de soupape selon la revendication 2 et éventuellement selon l'une quelconque des revendications 3 à 11, **caractérisée en ce qu'**un canal de liaison (55') du boîtier de base (11), ouvert vers l'extérieur, adjacent au silencieux (75), est fermé dans l'état installé par le fond de boîtier (83) du boîtier de silencieux (76), et **en ce qu'**entre des parois de boîtier (98, 99) du boîtier de base (11) limitant le canal de liaison (55') et le fond de boîtier (83), sont disposés des éléments d'étanchéité (100, 101).
